(19) Europäisches Patentamt
European Patent Office
Office européen des brevets

(11) **EP 4 394 720 B1**

(12) **EUROPEAN PATENT SPECIFICATION**

(45) Date of publication and mention
of the grant of the patent:
**05.08.2026   Bulletin 2026/32**

(21) Application number: **23305001.2**

(22) Date of filing: **02.01.2023**

(51) International Patent Classification (IPC):
**G06T 19/00** (2011.01)

(52) Cooperative Patent Classification (CPC):
**G06T 19/003;** G06T 2210/04; G06T 2210/56

(54) **GENERATING TRAINING DATASET**

ERZEUGUNG EINES TRAININGSDATENSATZES

GÉNÉRATION DE DONNÉES D'APPRENTISSAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**03.07.2024   Bulletin 2024/27**

(73) Proprietor: **Dassault Systèmes
78140 Vélizy-Villacoublay (FR)**

(72) Inventors:
• **JACOB, Paul
VELIZY VILLACOUBLAY (FR)**
• **DURAND, Tom
VELIZY VILLACOUBLAY (FR)**
• **MARCUSANU, Ana
VELIZY VILLACOUBLAY (FR)**

(74) Representative: **Bandpay & Greuter
11 rue Christophe Colomb
75008 Paris (FR)**

(56) References cited:
• **HILDEBRAND J. ET AL: "SIMULATING LIDAR TO CREATE TRAINING DATA FOR MACHINE LEARNING ON 3D POINT CLOUDS", vol. X-4/W2-2022, 19 October 2022 (2022-10-19), pages 105 - 112, XP093045706, Retrieved from the Internet <URL:https://isprs-annals.copernicus.org/articles/X-4-W2-2022/105/2022/isprs-annals-X-4-W2-2022-105-2022.pdf> DOI: 10.5194/isprs-annals-X-4-W2-2022-105-2022**
• **MING WAN ET AL: "Distance-field based skeletons for virtual navigation", VISUALIZATION, 2001. VIS '01. PROCEEDINGS, IEEE, PI, 1 January 2001 (2001-01-01), pages 239 - 560, XP031172893, ISBN: 978-0-7803-7201-6, DOI: 10.1109/VISUAL.2001.964517**
• **JAKLIN NORMAN ET AL: "Handbook of Research on Gaming Trends in P-12 Education :", 1 January 2016 (2016-01-01), pages 527 - 554, XP055798745, ISSN: 2327-1825, ISBN: 978-1-4666-9630-3, Retrieved from the Internet <URL:https://citeseerx.ist.psu.edu/viewdoc/download?doi=10.1.1.706.3060&rep=rep1&type=pdf> DOI: 10.4018/978-1-4666-9629-7.ch025**

## Description

### TECHNICAL FIELD

The disclosure relates to the field of computer programs and systems, and more specifically to a method, system and program for generating a training dataset comprising training patterns each including a 3D point cloud of a respective travelable environment.

### BACKGROUND

During the last few years, a very large number of deep neural networks operating on scene level point clouds have emerged, particularly for the task of object detection or instance segmentation and, more recently, self-supervised representation learning. In this context, a need for training datasets of 3D point clouds to train these networks has emerged.

In a first approach, the training of such networks may be based on already existing datasets of 3D point clouds. Indeed, several richly annotated public point cloud datasets or benchmarks are available online, mostly consisting of real user scans in actual rooms (e.g. Sun RGB-D, ScanNet or 3DSIS). However, these point cloud datasets come with major limitations. Firstly, they are limited in the number of instances: Sun RGB-D contains only 10000 RGB-D scans, and ScanNet contains only about 1500 rooms. This may hinder the training of neural networks which are known to be very sensitive to the amount and quality of available data. Secondly, they are limited in the number of object annotations and categories. As objects have to be annotated by hand, which is even more fastidious in 3D than in 2D, the process is long and error prone.

In a second approach, the training of such networks may be based on artificial scans that are generated prior to the training. In this second approach, a baseline solution for generating the artificial scans may comprise a simple sampling scheme on the surface of a mesh. However, this baseline solution has major drawbacks as well in the prior art. Indeed, existing solutions are based on assumptions that yield unrealistic 3D point clouds. Hildebrand J. ET AL: "SIMULATING LIDAR TO CREATE TRAINING DATA FOR MACHINE LEARNING ON 3D POINT CLOUDS", published on 19-10-2022 in SPRS ANNALS OF THE PHOTOGRAMMETRY, REMOTE SENSING AND SPATIAL INFORMATION SCIENCES discloses a virtual LiDAR system that simulates realistic LiDAR scans from 3D models to generate labelled 3D point clouds for training deep neural networks on point-cloud classification.

Within this context, there is still a need for an improved solution for generating a training dataset of 3D point clouds.

### SUMMARY

The present invention is defined by the appended independent claims. It is therefore provided a computer-implemented method for generating a training dataset. This method is referred to in the following as "the generating method". The training dataset comprises training patterns each including a 3D point cloud of a respective travelable environment. The generating method comprises, for each 3D point cloud, providing a 3D surface representation of the respective travelable environment, determining a traveling path inside the respective travelable environment, and, generating a virtual scan of the respective travelable environment along the traveling path, thereby obtaining the 3D point cloud.

The generating method further comprises the following:

- the determining of the traveling path comprises:

  ∘ determining a circulation area of the respective travelable environment;
  ∘ determining a positioned graph inside the circulation area. The positioned graph represents a topological skeleton of the circulation area; and
  ∘ identifying a browsing sequence of points on the positioned graph, thereby obtaining the traveling path;

- the generating of the virtual scan may further comprise

  ∘ computing virtual depth images of the 3D surface representation each at a respective point along the browsing sequence; and
  ∘ sampling each depth image with 3D points. The sampled 3D points form the obtained 3D point cloud;

- the computing of the virtual depth images may comprise, for each point of the browsing sequence, calculating a respective virtual depth image based on a position of the point and an orientation of the traveling path at the point;
- the identifying of the browsing sequence may comprise minimizing a traveling distance;
- According to the invention, the circulation area is a footprint, on a 2D surface floor representation of the respective travelable environment, of a volume of the respective travelable environment which is free of any 3D object between a minimum height and a maximum height;
- the determining of the circulation area may comprise:

    ○ retrieving the set of all objects having a position on the 3D surface representation which is between the minimum height and the maximum height;
    ○ projecting, on the 2D surface floor representation, the 3D surface representation of said set of objects, thereby obtaining a non-travelable area; and
    ○ subtracting the non-travelable area to the 2D surface floor representation;

- the determining of the circulation area may further comprise:

    ○ determining a margin area around the non-travelable area; and
    ○ subtracting the margin area to the 2D surface floor representation;

- the positioned graph may represent a portion of a medial axis graph of the circulation area;
- the determining of the traveling path may further comprise determining the medial axis graph of the circulation area. The medial axis graph comprises at least one isolated leave. The determining of the positioned graph comprises removing the at least one isolated leave from the medial axis graph; and/or
- the positioned graph may further comprise edges each between a respective pair of nodes of the positioned graph. The distance represented by each edge of the positioned graph is smaller or equal than 30 centimeters.

The method according to the invention further comprises using the training dataset generated by the generating method for training a neural network taking as input a scan of a real-world environment.
It is further provided a computer program comprising instructions for performing the generating method and/or the using method.
It is further provided a computer readable storage medium having recorded thereon the computer program.
It is further provided a system comprising a processor coupled to a memory and a graphical user interface, the memory having recorded thereon the computer program.

## BRIEF DESCRIPTION OF THE DRAWINGS

Non-limiting examples will now be described in reference to the accompanying drawings, where:

- FIG. 1 shows a flowchart of an example of the generating method;

- FIG.s 2 and 3 shows an example of implementation of the generating method;

- FIG. 4 illustrates an example of the determining of the circulation area;

- FIG. 5 illustrates an example of the determining of the positioned graph;

- FIG.s 6 to 8 show examples of results of the generating method; and

- FIG. 9 shows an example of the system.

## DETAILED DESCRIPTION

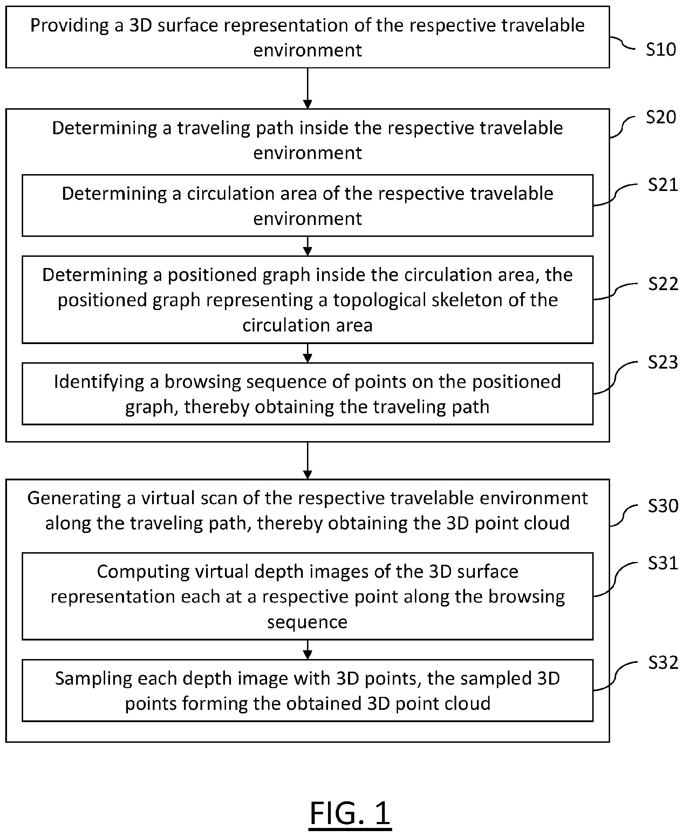

With reference to the flowchart of FIG. 1, it is proposed a computer-implemented method for generating a training dataset. The training dataset comprises training patterns each including a 3D point cloud of a respective travelable environment. The generating method comprises, for each 3D point cloud, providing S10 a 3D surface representation of the respective travelable environment, determining S20 a traveling path inside the respective travelable environment, and, generating S30 a virtual scan of the respective travelable environment along the traveling path, thereby obtaining the 3D point cloud.
Such a method forms an improved solution for generating a training dataset of 3D point clouds.

Notably, the generating method allows generating a training dataset of 3D point clouds which is realistic. Indeed, the determined traveling paths allow generating the virtual scans as if a real person was navigating through the travelable environments with a 3D scanner (e.g., Phone LiDAR or Kinect) and scanning the environments. Notably, it allows distinguishing parts of the environment which are accessible for the user scan and parts of the environment which are not. Indeed, each virtual scan is generated along the traveling path determined of the environment. It allows distinguishing visible surfaces of objects along the traveling path from occluded surfaces (e.g., under a table or behind frames on a wall) that therefore contain few or no points compared to those visible. As in a real scanning scenario, the generated 3D point cloud has few or no points under the table or behind frames on the wall for instance. The 3D point clouds of the generated training dataset therefore have the same properties as those that could be obtained from real scans.

Moreover, the generating method allows for more accurate 3D scene understanding. Indeed, because the training is based on a more realistic training dataset, the machine-learning is more accurate. The generating method therefore allows training a neural network to perform more accurate segmentation of a travelable environment based on a scan of the travelable environment, and/or to more accurately detect objects of the travelable environment. The generation method allows training the neural network to reconstruct a 3D representation that is closer to the real travelable environment and/or to register the scan of the travelable environment more accurately.

Furthermore, the generating of the training dataset is carried out automatically by a computer system. This allows for a deterministic and accurate computation of the 3D point clouds. In particular, this allows a user, e.g., an engineer, to obtain the training dataset without tedious efforts: the user provides the 3D surface representations of the travelable environments, and the computer automatically provides the virtual scan generated for each provided travelable environment. This makes the method ergonomic.

The generating method is computer-implemented. This means that steps (or substantially all the steps) of the generating method and/or the using method are executed by at least one computer, or any system alike. Thus, steps of the generating method and/or the using method are performed by the computer, possibly fully automatically, or, semi-automatically. In examples, the triggering of at least some of the steps of the generating method and/or the using method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of the generating method and/or the using method is to perform the generating method and/or the using method with a system adapted for this purpose. The system may comprise a processor coupled to a memory and a graphical user interface (GUI), the memory having recorded thereon a computer program comprising instructions for performing the generating method. The memory may also store a database. The memory is any hardware adapted for such storage, possibly comprising several physical distinct parts (e.g. one for the program, and possibly one for the database).

The generating method further comprises after the performing of the generating method, performing the using method based on the generated training dataset, i.e., which comprises, after the performing of the generating method, training a neural network based on the generated training dataset. The neural network is configured for 3D scene understanding. The generated training dataset is thus adapted for machine-learning a neural network configured for 3D scene understanding based on real scans of real travelable environments. The generated training dataset may comprise more than 10000, e.g., more than 100000 or 500000 training patterns. Alternatively, the generated training dataset may comprise at least 1000 training patterns (e.g., may comprise 1000 or 2000 training patterns). The using method may comprise training the neural network to take as input a scan (i.e., a 3D point cloud resulting from a scanning) of a travelable environment, e.g., measured by one or more sensors, and to perform the 3D scene understanding of the travelable environment based on the scan.

The 3D scene understanding may be a process, possibly real time, comprising perceiving, analyzing and/or elaborating an interpretation of a 3D scene (e.g., a travelable environment, that may for example be dynamic), e.g., observed through a network of sensors (e.g., the scan taken as input by the neural network). For example, the 3D scene understanding may comprise performing a 3D object detection, a 3D semantic segmentation, a 3D instance segmentation, a 3D object retrieval, a 3D scene or object registration and/or a point cloud to mesh transformation (e.g., in the case where one of the sensors collects point clouds).

The 3D scene understanding may be a process performed based on 3D input data. For example, the 3D input data may be the scan (i.e., the 3D point cloud) taken as input by the neural network. The 3D scene understanding may for example be the process described in the document Hou, Ji, et al. "Exploring data-efficient 3d scene understanding with contrastive scene contexts," Proceedings of the IEEE/CVF Conference on Computer Vision and Pattern Recognition, 2021 (https://openaccess.thecvf.com/content/CVPR2021/papers/Hou_Exploring_Data-Efficient_3D_Scene_Under standing_With_Contrastive_Scene_Contexts_CVPR_2021 _paper.pdf) which is incorporated herein by reference. As explained in this document, the 3D scene understanding may comprise collecting and labelling real 3D scenes.

Alternatively or additionally, still in the case of a process performed based on 3D input data, the 3D scene understanding may comprise performing any one or any combination of the applications described in the resource from google researchers Alireza Fathi and Rui Huang about 3D Scene Understanding with TensorFlow3D (https://ai.google blog.com/2021/02/3d-scene-understanding-with-tensorffow.html) which is incorporated herein by reference.

Alternatively, the 3D scene understanding may be a process performed from a 2D image. In that case, the 3D scene understanding may be the process described in the document Zhang, Cheng, et al. "Holistic 3d scene understanding from a single image with implicit representation," Proceedings of the IEEE/CVF Conference on Computer Vision and Pattern Recognition, 2021 (https://openaccess.thecvf.com/content/CVPR2021/papers/Zhang_Holistic_3D_Scene_Understanding_From a Single_Image With_Implicit_CVPR_2021_paper.pdf) which is incorporated herein by reference.

The performing of the 3D scene understanding may comprise segmenting the travelable environment. The segmenting may comprise annotating points (e.g., all the points) of the scan. The annotating may comprise assigning an annotation to each point of the scan, the annotation being associated with an object to which the point belongs. The points assigned to a same annotation (i.e., the points of a same segment) may correspond to the points that have been sampled on a same real-world object (i.e., on the surfaces of this real-world object) inside the travelable environment. In that case, the neural network may output the annotation to be assigned to each point of the scan. The neural network may be trained to output one or more groups of points, each group gathering points assigned to a same annotation and that, e.g., have been sampled on a same real-world object (i.e., on the surfaces of this real-world object) inside the travelable environment.

Alternatively or additionally, the performing of the 3D scene understanding may comprise detecting one or more objects inside the travelable environment. For example, the neural network may be trained to output one or more 3D bounding boxes (e.g., to output parameters of each 3D bounding box), each 3D bounding box representing an envelope of a respective real-world object inside the travelable environment (e.g., the 3D bounding box may include 3D surfaces representing the real faces of the respective real-world object). For example, each 3D bounding box may enclose points that have been sampled on a same real-world object (i.e., on the surfaces of this real-world object) inside the travelable environment. The parameters of each 3D bounding box may include a semantic class, a center position, dimensions and/or an orientation. The performing of the 3D scene understanding may comprise, for each outputted 3D bounding box, determining the object represented by the 3D bounding box, e.g., based on a shape of the envelop represented by the 3D bounding box. Alternatively, the neural network may also be trained to directly output, for each 3D bounding box, the object represented by the 3D bounding box. The performing of the 3D scene understanding may comprise displaying the detected objects (e.g., the envelopes representing the objects), e.g., superimposed on the scan. The using method may comprise training one or more neural networks to perform the detection and segmentation simultaneously.

Alternatively or additionally, the performing of the 3D scene understanding may comprise reconstructing a 3D representation of the travelable environment based on the scan. For example, the neural network may be trained to output one or more surfaces each representing the travelable environment. The reconstructing of the 3D representation may comprise assembling the one or more surfaces outputted by the neural network.

Alternatively or additionally, the performing of the 3D scene understanding may comprise registering the scan. The registering of the scan may comprise aligning one or more portions of the scan each with a reference point cloud (e.g., corresponding to a scan of an object). The registering may comprise, for each portion, determining the reference point cloud for the portion and aligning the portion with the determined reference point cloud. The aligning of each portion may comprise determining rotation and/or scaling parameters for aligning the portion with the determined reference point cloud. The neural network may output the one or more portions, the reference point cloud for each portion and/or the alignment for each portion (i.e., the rotation and/or scaling parameters for the alignment).

After the training, the using method may comprise providing a scan of a real-world travelable environment (e.g., performing the scan of the real-world travelable environment, e.g., based on the one or more sensors) and applying the trained neural network to the provided scan, thereby performing the 3D scene understanding. For example, the neural network may output one or more characteristics of the travelable environment, and the using method may comprise performing the 3D scene understanding (e.g., the 3D object detection, the 3D semantic segmentation, the 3D instance segmentation, the 3D object retrieval, the 3D scene or object registration and/or the point cloud to mesh transformation) based on the one or more characteristics outputted by the neural network. Alternatively, the neural network may be trained to directly output the results of the 3D scene understanding (i.e., the detected 3D object(s), the 3D semantic segmentation, the 3D instance segmentation, the retrieved 3D object(s), the 3D scene or object registration and/or the point cloud to mesh transformation).

The providing S10 may comprise retrieving the 3D surface representation of the respective travelable environment. For example, the 3D surface representation may be recorded on a memory, and the providing S10 may comprise retrieving the 3D surface representation from the memory. In that case, the 3D surface representation may have already been generated prior to the performing of the generating method. Alternatively, the providing S10 may comprise generating (e.g., automatically and/or randomly) the 3D surface representation of the respective travelable environment. For example, the 3D surface representation may comprise 3D objects each representing a respective object of the respective travelable environment. The 3D objects may be positioned relative to each other according to the positions of the objects of the respective travelable environment. Each 3D object may comprise surfaces that may together represent the (e.g., exterior) envelopes of the object that the 3D object represents. The providing S10 may comprise automatically generating and/or placing the 3D objects of the 3D surface representation (e.g., including the surfaces of the 3D objects) according to the positions of the objects of the respective travelable environment.

Each travelable environment is an environment in which a person can move (for example a person standing or a person in a wheelchair). For example, the travelable environments may be places such as offices, apartments and/or shops. The travelable environments for which the training dataset includes a 3D point cloud may be all different. The travelable environments may correspond to a same category of environment (e.g., office, apartment and/or shop). Each travelable environment may comprise objects that are naturally present in this kind of category (e.g., tables and chairs for an office), and these objects may be positioned relative to each other. Each travelable environment may also comprise a (e.g., planar) floor and/or walls delimiting the travelable environment and/or one or more rooms that the travelable environment comprises. Each travelable environment may be an environment that exists in the real-world or may be imaginary (but could exist in the real world. For example, the method may comprise generating one or more (e.g., all) of the travelable environments (e.g., randomly and/or based real-world environments).

The determining S20 of the traveling path inside the respective travelable environment may be performed automatically. The determined traveling path may correspond to a path that a real person can make in the respective travelable environment. The determined traveling path may be along (e.g., around) each of the objects in the environment. The determined traveling path may be continuous and may pass around and/or along each of the objects in the environment (e.g., the table, the chairs and/or the sofa when the environment is an apartment, or the living room of an apartment).

According to the invention, the determining S20 of the traveling path comprises determining S21 a circulation area of the respective travelable environment. The circulation area may be a 2D space. The circulation area may be a footprint, on a 2D surface floor representation of the respective travelable environment, of a volume of the respective travelable environment which is free of any 3D object (e.g., between a minimum height and a maximum height of the respective travelable environment). The 2D surface floor representation may represent the floor of the respective travelable environment. The 2D surface floor representation may be a polygon having sides representing each of the outer walls of the respective travelable environment. The footprint may correspond to a projection, on the 2D surface floor representation, of the volume of the respective travelable environment which is free of any 3D object.

In examples, the determining S21 of the circulation area may comprise retrieving the set of all objects having a position on the 3D surface representation which is between the minimum height and the maximum height. For example, the retrieving may comprise determining, for each object of the 3D surface representation, whether a portion of the object is positioned between the minimum height and the maximum height, and retrieving the object in that case. For example, the minimum height may be higher than 2 centimeters and/or lower than 10 centimeters (e.g. may be equal to 5 centimeters). For example, the maximum height may be higher than 1 meter and/or lower than 2 meters (e.g. may be equal to 1.5 meter). Then, the determining S21 of the circulation area may comprise projecting, on the 2D surface floor representation, the 3D surface representation of the said set of objects, thereby obtaining a non-travelable area. The result of the projecting (i.e., the projection) may be the obtained non-travelable area. The projecting may comprise individually projecting the 3D surface representation of each object of the said set of objects (i.e., projecting the surfaces of the provided 3D surface representation that are associated to this object) and then assembling the individual projections. For each object of the said set of objects, the projection may be a projection of the portion of the object which is positioned between the minimum height and the maximum height (i.e., a projection of the volume delimited by the surfaces of the object, e.g., truncated between the minimum height and the maximum height). Alternatively, the projecting may comprise assembling the portions of the objects which are positioned between the minimum height and the maximum height (e.g., assembling the volumes delimited by the surfaces of the objects of the said set, e.g., truncated between the minimum height and the maximum height), thereby obtaining a total volume, and then projecting the said total volume. After the projecting, the determining S21 of the circulation area may comprise subtracting the non-travelable area to the 2D surface floor representation. The result of the subtracting may be the determined circulation area. In that case, the determined circulation area may thus be equal to the 2D surface floor representation without the non-travelable area.

In examples, the determining S21 of the circulation area may further comprise determining a margin area around the non-travelable area. The margin area may be an area around the 2D surface floor representation that is around the non-travelable area (e.g., around a boundary of the non-travelable area). For example, the margin area may consist of all points on the 2D surface floor representation that are within a minimum distance of the non-travelable area (e.g., lower than 80 centimeters and/or higher than 20 centimeters, e.g., equal to 40 centimeters). The determining of the margin area may comprise determining all points on the 2D surface floor representation that are within this minimum distance of the non-travelable area. Then, the determining S21 of the circulation area may further comprises subtracting the determined margin area to the 2D surface floor representation (i.e., in addition to the non-travelable area already subtracted from the 2D surface floor representation). In that case, the determined circulation area may thus be equal to the 2D surface floor representation without the non-travelable area and without the margin area.

According to the invention, the determining S20 of the traveling path comprises determining S22 a positioned graph inside the circulation area. The positioned graph may represent a topological skeleton of the circulation area. The positioned graph may comprise nodes and edges each between a respective pair of nodes of the positioned graph. The circulation area may be formed of intermediate paths around the objects in the respective travelable environment and connected to each other, and the nodes of the positioned graph may be substantially in the middle of these intermediate paths, substantially regularly spaced from each other along these intermediate paths. For example, each edge between a respective pair of nodes may represent a distance between these two nodes of the pair in the respective travelable environment, and each edge of the positioned graph may represent approximately a constant distance. For example, the distance represented by each edge of the positioned graph may be smaller or equal than 30 centimeters and/or higher or equal than 10 centimeters.

In examples, the positioned graph may represent a portion of a medial axis graph of the circulation area. For example, the medial axis graph may comprise at least one isolated leave, and the positioned graph may be equal to the medial axis graph without the least one isolated leave (i.e., without the points and the edges of the at least one isolated leave). An isolated leave may comprise an end node (i.e., a node that is connected only by one edge and only to one other node) and a crossing node (i.e., a node connected by at least three edges to at least three other nodes). The crossing node may be the first crossing node (i.e., the first node connected by at least three edges to at least three other nodes) of the medial axis graph starting from the end node and going through the edges. The isolated leave may also comprise each of the one or more successive nodes that are between the end node and the crossing node. The determining S20 of the traveling path may comprise determining the medial axis graph of the circulation area. The medial axis graph may comprise a set of points having more than one closest point on the boundary of the circulation area. The determining of the medial axis graph of the circulation area may be performed based on a known algorithm. The determining S22 of the positioned graph may comprise removing the at least one isolated leave (e.g., all the isolated leaves) from the determined medial axis graph. The removing may comprise, for each isolated leave, removing the end node and the one or more successive nodes that are between the end node and the crossing node of the isolated leave and the edges that are between the one or more successive nodes, the end node and the crossing node.

According to the invention, the determining S20 of the traveling path comprises identifying S23 a browsing sequence of points on the positioned graph, thereby obtaining the traveling path. The identified browsing sequence of points may be the obtained traveling path. The browsing sequence may be a sequence of successive points of the positioned graph. The browsing sequence may start and end at a same point of the positioned graph (i.e., the start and end points of the browsing sequence may be the same). The successive points may follow each other in the positioned graph (i.e., they may be connected by edges in the positioned graph). The browsing sequence may form the shortest possible path along the points of the positioned graph that starts from a start point, includes each point at least once and returns to the start point. The browsing sequence may comprise each point of the positioned graph only once (except for the start and end points).

The identifying S23 of the browsing sequence may comprise solving a travelling salesman problem (i.e., given a list of cities and the distances between each pair of cities, finding the shortest possible route that visits each city exactly once and returns to the origin city), wherein the cities are the points of the positioned graph and the distances are the distances represented by the edges of the positioned graph. The identifying S23 of the browsing sequence may comprise performing a known algorithm for solving this travelling salesman problem. The identifying S23 of the browsing sequence may comprise minimizing a traveling distance. The traveling distance may be equal to a sum of the distances represented by the edges connecting the successive points of the browsing sequence. The minimizing of the traveling distance may comprise determining each possible path along the points of the positioned graph that starts from a start point, includes each point at least once and returns to the start point, computing the traveling distance of each determined possible path and selecting the possible path having the lowest traveling distance.

The generating S30 of the virtual scan may be performed automatically. The obtained 3D point cloud may be the result of the generated virtual scan. The 3D point cloud may comprise points sampled on objects in the respective travelable environment. Each point of the 3D point cloud may comprise spatial coordinates in a 3D space. The generating S30 may comprise computing S31 virtual depth images of the 3D surface representation each at a respective point along the browsing sequence (i.e., computing several different virtual depth images). The computing S31 may comprise, for each point of the browsing sequence, calculating a respective virtual depth image of the 3D surface representation based on a position of the point and an orientation of the traveling path at the point. Each respective virtual depth image may have a viewpoint which is defined by the position of the point and the orientation of the traveling path at the point. The orientation may be defined by a vector defined between the point and a next point that follows the point in the browsing sequence, or between the point and a previous point that precedes the point in the browsing sequence, or by an average of these two vectors. Each respective virtual depth image may comprise depth information (i.e., information relating to the distance of the surfaces of the 3D surface representation from the position of the point). Each respective virtual depth image may be oriented according to the orientation of the traveling path at the point from which the respective virtual depth image is calculated.

Then, the generating S30 may comprise sampling each depth image with 3D points. For example, the sampling may comprise determining a set of 2D points substantially evenly spaced from each other on a plane of the virtual depth image and computing a set of corresponding 3D points in the 3D surface representation (e.g., based on the depth information of the virtual depth image). Each corresponding 3D point may correspond to a projection of one of the 2D points in the 3D surface representation (i.e., on the surfaces of objects of the 3D surface representation). The projection of each 3D point may be according to the position and orientation of the point from which the respective virtual depth image is calculated (i.e., the position of the point and the orientation of the traveling path at the point). The sampled 3D points (i.e., the 3D points sampled for the different virtual depth images all together) may form the obtained 3D point cloud.

Optionally, the obtained 3D point cloud may be annotated. For example, each point of the 3D point cloud may comprise an annotation (e.g., indicating on the surface of which object it is located). The generating method may comprise determining the annotation of each point, e.g., as a function of the objects in the 3D surface representation (e.g., during the sampling).

With reference to FIG.s 2 to 5, an example of implementation of the generating method and of the using method is now discussed.

The generating method and/or the using method may be included in a process of automatic data generation, which may comprise automatically generating training and/or testing data for machine learning pipelines. In this specific case, starting from a collection of 3D environments (i.e., the said respective travelable environments), the process comprises generating simulated 3D point cloud scans (i.e., the said obtained 3D point clouds), e.g., in a successive acquisition scenario. The process allows mimicking a user that would walk in these environments with a 3D sensor (e.g., smartphone embedded or Kinect) and scan these environments.

Each respective travelable environment (also referred to as "3D environment" in the following) comprises a 3D layout called F. The 3D layout F is the geometry of the environment, including set of walls and boundaries (i.e., positions and dimension of each wall and boundary). In particular, the 3D layout F contains enough information to be able to derive the floor $\overline{F}$ of the 3D environment as a 2D horizontal polygon. Each respective travelable environment also comprises a collection of 3D objects called $O = \{O1, ..., On\}$. The collection of 3D objects O is a set of CAD models (one for each object) with their size, position and orientation in 3D space. These objects may comprise semantic annotations such as their type (e.g., chair, table or sofa). From these 3D objects and their special information, the process may derive 3D oriented bounding boxes which may then be used for 3D object detection pipelines. Optionally, each respective travelable environment may also comprise a set of 3D openings (i.e., the doors and windows in the environment). The process may treat these 3D openings as 3D objects among others.

The process may consider each 3D environment to be bounded in space, i.e., not expanding at infinite in any direction. Each 3D environment may also be in one single piece. Otherwise, the process may treat the different pieces as separate 3D environments. The process may comprise reconstructing the geometry called G of the scene, i.e. the 3D representation of the whole scene as a triangular mesh. The reconstructing may comprise aggregating all the 3D information present in the layout, the set of objects and the optional openings. The process allows generating an accurate point cloud sampling called P on the surface of this geometry, such that each point of P is on the surface of the geometry G (with a certain margin of error in order to account for plausible noises in the sensor). This sampling may account for temporal scanning and partial occlusions (i.e., no points on interior surfaces).

FIG.s 2 and 3 show an example of implementation of the generating method. The figures show steps of the generating method.

A first step S10 of the generating method comprises providing of the 3D surface representation 101 of a respective travelable environment, which is a room in this example. Then, a second step S20 of the generating method comprises determining S21 the circulation area 102 (also referred to as the "circulation space" in the following) of the room, from the generating method extracts S22 a graph of user positions by computing the medial axis of this circulation space. Then, the generating method comprises refining this graph to avoid irrelevant positions, thereby obtaining a positioned graph 103, and, then, comprises determining S23 an order on this positioned graph 103 by using an approximate solution of the travelling salesman problem (i.e., in the solution, the user goes to each position with the least steps as possible), thereby obtaining the traveling path 104.

A third step S30 of the generating method comprises generating the virtual scans. Once the travelling path 104 of the scanning device (or equivalently, the user that holds it) is computed, the generating method comprises virtually placing cameras at each of the positions (i.e., each of the points of the browsing sequence) of the travelling path 104 pointing towards the next one. The generating method comprises retrieving S31 depth maps (i.e., the virtual depth images 105). In examples, the generating method may optionally also comprise retrieving S31' object-pixel correspondences using rasterization. Then, the generating method comprises retrieving S32 back the 3D coordinates using the camera parameters that have been picked, thereby obtaining the 3D point cloud. In example (e.g., when the generating method comprises retrieving S31' object-pixel correspondences), by aggregating all the information of the different cameras, the generating method comprises retrieving an annotated point cloud. In examples, the generating method may then further comprise enriching S33 the annotated point cloud by adding either annotated or estimated bounding boxes.

With reference to FIG.s 4 and 5, the determining S20 of the travelling path is now discussed in more details.

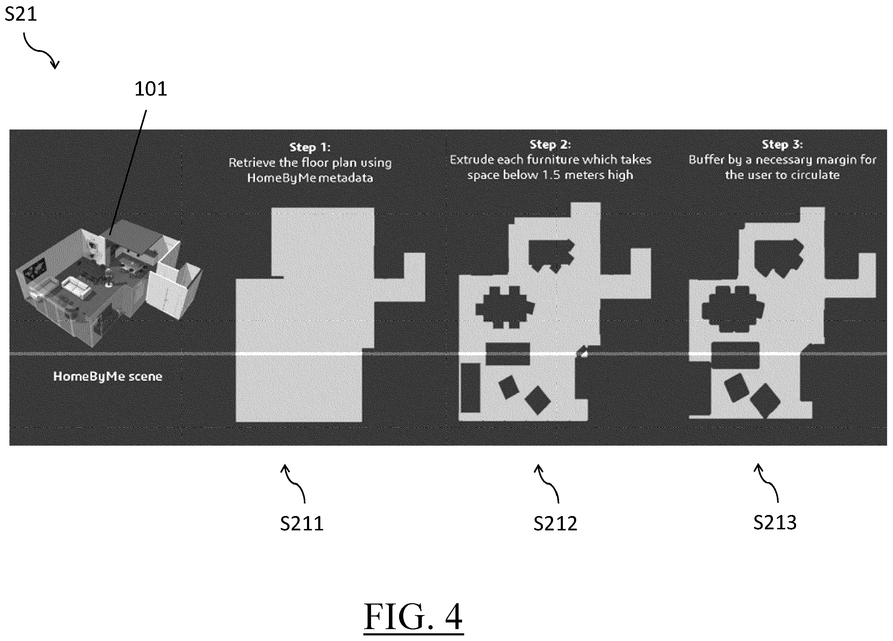

A first step of the determining S20 is the determining S21 (or calculating) of the circulation area 102 (or circulation space) of the room: that is, the set of positions considered as reachable or accessible for a person. FIG. 4 illustrates an example of the determining S21 of the circulation area. Starting from the layout F which contains the boundaries of the 3D environment, the determining S20 comprises first retrieving S211 a 2D polygon $\overline{F}$ which represents a floor of the 3D environment. Then, determining S20 comprises retrieving the set of all objects having a position on the 3D surface representation which is between a minimum height $h\_min$ and a maximum height $h\_max$. For example, the generating method may consider two height thresholds and between which no object must be in order for a location to be considered accessible. In examples, the minimum height $h\_min$ may be higher than 2 centimeters and/or lower than 10 centimeters, e.g. $h\_min$ may be equal to 5 centimeters. In examples, the maximum height h_max may be higher than 1 meter and/or lower than 2 meters, e.g. $h\_max$ may be equal to 1.5 meter. In order to take into account several user types, the method may comprise selecting the minimum height and the maximum height (e.g., upon user interaction). For example, the generating method may use a minimum height of 0 centimeter to avoid any small obstacle. The generating method may comprise selecting different minimum heights and maximum heights to generate several point clouds for each 3D environment. Then, for each object from the set of objects O, the retrieving may comprise computing the subset $\hat{O}$ of all objects that are partially between these two thresholds. The generating method then comprise retrieving S212 the floor without obstructions $F_{\hat{O}}$ as the set of all positions that are not obtruded by an object. The retrieving the floor without obstructions $F_{\hat{O}}$ may comprise projecting, on the 2D surface floor representation, the 3D surface representation of said set of objects, thereby obtaining a non-travelable area, and, subtracting the non-travelable area to the 2D surface floor representation. Optionally, the generating method may also comprise removing S213 a margin area. In that case, the determining of the circulation area may further comprise determining a margin area around the non-travelable area, and, subtracting the margin area to the 2D surface floor representation. For example, the generating method may consider a margin m (e.g., lower than 80 centimeters and/or higher than 20 centimeters, e.g., equal to 40 centimeters), and define the circulation space $F_C$ as all positions of the floor without obstructions that are at least distant of the border from m. In examples, when the environment does not have any circulation space (e.g., the room is full of objects), the method may comprise filtering the environment from the dataset at this step.

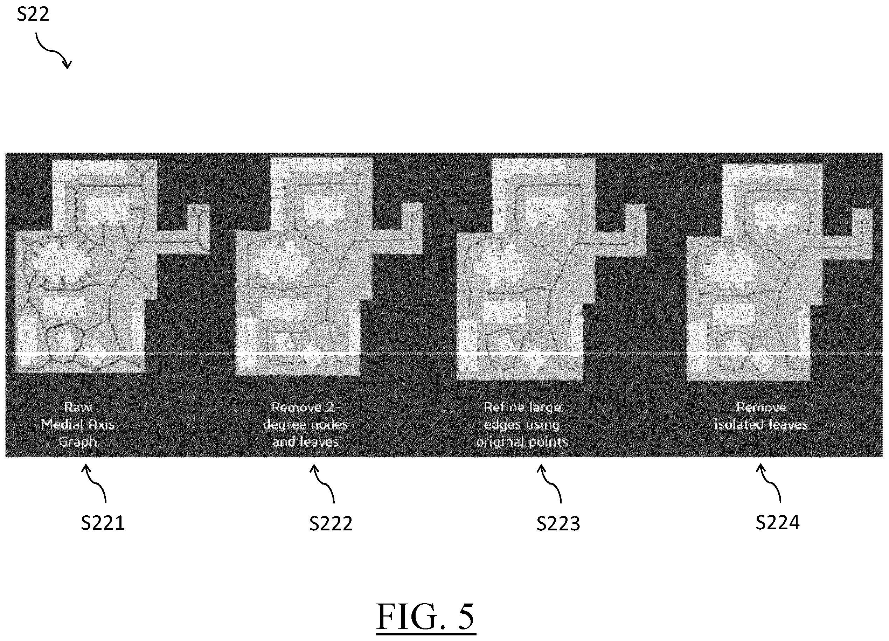

A second step of the determining S20 is the determining S22 of the positioned graph. FIG. 5 illustrates an example of the determining of the positioned graph. The determining S22 of the positioned graph comprises determining S221 the medial axis graph of the circulation area. The generating method may comprise considering the following hypothesis: in a 3D environment, a user may be most likely to circulate as much as possible in the middle of the circulation space: for instance in a corridor, it seems reasonable to think that a person will walk in the middle rather than on one of the sides. Hence, by determining the medial axis graph M of the circulation space $F_C$, the generating method allows considering the most plausible user positions. The medial axis graph consists of the set of all points having at least two closest points on the shape's boundary.

As the shape of the circulation space $F_C$ may vary from one environment to another, it is intractable to compute it exactly in closed form: hence, the generating method comprises computing an approximate medial axis graph $G_M = (V_M, E_M)$ such that all vertices and edges are close to the actual medial axis. In an example implementation, the generating method may implement this approximation within the Trimesh Python library, which computes it using a Voronoi diagram of evenly spaced points on the boundary of the polygon.

The obtained medial axis graph is a connected set of positions within the circulation space of the 3D environment (see FIG. 5). In order to obtain a plausible set of user positions that are evenly spaced, the generating method may comprise applying different post-processing steps on this medial axis graph. First, the generating method may comprise performing a first post-processing S222 which may comprise removing each 2-degree node from the graph and connecting their surrounding neighbors. For example, for each 2-degree node v in the graph, the generating method may comprise removing the node and the two connecting edges $(v,v_1)$ and $(v,v_2)$, and connecting back the two neighbors $(v_1,v_2)$ of the removed node. After the removing of the 2-degree nodes, the first post-processing S222 may comprise removing each isolated leave (i.e., each 1-degree node) from the resulting graph (i.e., the graph without the removed 2-degree nodes). After the performing of the first post-processing S222, the generating method comprises obtaining the second graph of FIG. 5, that is referred to as $G_{M,1} = (V_{M,1}, E_{M,1})$.

Then, in order to obtain evenly spaced points, the generating method may comprise determining the longest edges of $G_{M,1}$. For example, until the generating method have reached either a given number of points or a given maximum edge length for the largest edge of the current graph, the determining of the longest edges may comprise:

- picking the largest edge of a current graph $(v_1,v_2)$ ;
- retrieving the 2-degree nodes $(u_1,...,u_n)$ that are along this edge in the raw medial axis graph $G_M$ ; and
- picking a middle node $u_{n//2}$ (or adding a middle node $u_{n//2}$ when there is no node between $v_1$ and $v_2$ in the graph $G_M$, e.g., by positioning the middle node $u_{n//2}$ in the middle of the segment between $v_1$ and $v_2$) and adding it back to the graph, by removing the edge $(v_1,v_2)$ and adding $(v_1, u_{n//2})$ and $(u_{n//2},v_2)$.

The graph obtained is referred to as $G_{M,2} = (V_{M,2}, E_{M,2})$.

This last graph may contain one or more isolated leaves that do not look natural for a user's walk in the room. The determining S22 of the positioned graph comprising removing S224 the at least one isolated leave from the medial axis graph. For example, the generating method may comprise determining each leave (i.e., 1-degree nodes) that is attached to a (3 or more)-degree node and an edge length below a given threshold, and may comprise removing these leaves.

As a last optional step, the generating method may comprise picking only the largest component of this graph (it is possible that the circulation space is split in two or more pieces). In other examples, the generating method may comprise generating two or more scans independently from these connected components. The final graph is referred to as $G_U = (V_U, E_U)$, and contains points that are spaced evenly in the graph with a controllable number of positions and/or maximum edge length. The generating method may also consider the height of the positions in 3D. The generating method may comprise picking a constant height for the scanner (e.g., higher than 1 meter and/or lower than 2 meters, e.g., equal to 1.5 meter). In example, the generating method may also use different heights with randomness, and may comprise interpolating the height between some key points in the graph. The generating method may comprise selecting those parameters (e.g., upon user interaction) and may consider tuning them in order to generate several point clouds given a single 3D environment.

After the determining S22 of the positioned graph (i.e., of the set of positions, or points, of the positioned graph), the generating method comprises identifying S23 a browsing sequence of points on the positioned graph, thereby obtaining the traveling path. The identifying S23 of the browsing sequence may comprise determining a walk on this set to define the path of the scanning user. The generating method may compute this path according to properties that are desired on the resulting scans. For instance, the generating method may use a random walk on the graph conditioned on the last steps, to induce randomness in the scan and possible temporal redundancies.

The generating method may also use the most exhaustive path possible, i.e. a walk that would pass on each possible user position. To have a plausible realistic path without too many zigzags or U-turns, the method may consider going across all possible positions in the last steps, while only moving along the edges of the graph: this is the traveling salesman problem. Mathematically speaking, the generating method may comprise finding the shortest possible sequence of graph vertices $(v_1, \ldots, v_N) \in (V_U)^N$ such that $\forall i \in \{1, \ldots, N - 1\}$, $(v_i, v_{i+1}) \in E_U$ and $\forall v \in V_U$, $\exists i \in \{1, \ldots, N\}$, $v_i = v$.

This problem is NP-hard. Hence, there is no algorithm in polynomial time that allows retrieving a solution of the problem. The generating method may thus use algorithms providing reasonable approximations, e.g., may use a routine (e.g., implemented within networkx, a python library for graphs) that uses the Christofides algorithm (3/2-approximation), e.g., as discussed in the document Christofides, Nicos (1976), Worst-case analysis of a new heuristic for the travelling salesman problem (PDF), Report 388, Graduate School of Industrial Administration, CMU which is incorporated herein by reference. This approximation algorithm leads to computing a reasonable solution in very short time (only a few milliseconds for about 100/200 positions on the graph).

Optionally, the 3D environment may comprise information about the plausible entrance and exit point(s) of the 3D environment (e.g., the generating method may use the semantics of certain elements of the scene to deduce points of passage and entry (e.g., a door or an open space)). In that case, the generating method may comprise considering linking the plausible entrance and exit point(s) by defining new nodes for them in $G_U$ and edges to link them to the closest existing node(s) in $G_U$. Then, the generating method may comprise using the previous algorithm to pass by all or a subset of those entrance and exit points. Finally, in addition to the positions, the generating method may comprise computing the directions (i.e., the orientations) that the cameras point at. The generating method may comprise using a simple heuristic, which consists of pointing towards the next position in the path (and keeping the previous direction for the last position). Mathematically speaking, the generating method may use $\forall i \in \{1, \ldots, N - 1\}$, $d_i = v_{i+1} - v_i$ and $d_N = d_{N-1}$. The generating method may also comprise adding a small noise to this direction, so that if the user goes twice at the same place, he ends up scanning different points. More advanced settings may involve looking at the center of the 3D environment at key positions, to obtain "general" point of views. Finally, the generating method comprises obtaining a sequence of position-direction pairs $C = ((v_1, d_1), \ldots (v_n, d_n))$, which represents the final path.

The generating S30 of the virtual scan is now discussed. The generating S30 of the virtual scan may comprise translating the sequence of positions and directions C (i.e., the traveling path) into a point cloud scan P (i.e., the 3D point cloud). Each sequence of positions and directions C may result in a single point cloud scan P. However, from a single scene (i.e., from a single travelable environment), the generating method may comprise computing several sequences of positions and directions (i.e., several traveling paths) resulting each time in a different 3D point cloud (i.e., may comprise generating several 3D point clouds). Those several sequences may for example correspond to different user behaviors (e.g., from entrance to exit, only few viewpoints close to the entrance, scan began and stopped inside the room, users of different heights, more or less random orientations with focus on objects or moving directions or 360 acquisition).

A first step of the generating S30 may comprise modeling the sensors (i.e., determining parameters of the sensors). The sensors may be modelled as RGB-D cameras placed along the path C, using its given position and heading direction at each step. The generating S30 may comprise considering that each camera is always oriented upwards (i.e.,

the user holds its device vertically). The generating S30 may comprise providing the cameras with their intrinsic parameters, including, e.g.:

- f: a focal length,
- $k_u$ and $k_v$: image magnification factors,
- $c_u$ and $c_v$: coordinates of a projection of an optical center of the camera on an image plane, and/or
- $s_{uv}$: reflects a potential non-orthogonality of rows and columns of photosensitive electronic cells that make up the camera sensor. In examples, this parameter may be neglected and therefore may take a null value.

Alternatively or additionally, the generating S30 may consider square pixels, a centered optical center and orthogonal rows and columns of the photosensitive electronics cells. In that case, the generating S30 may comprise characterizing each camera using, e.g.:

- Its resolution w × h, and/or
- Its field of view *FOV.*

In examples, the generating S30 may use w = *h* = 128 and a field of view *FOV* = 60°. In examples, the generating method may comprise selecting those parameters (e.g., tuning those parameters, for example upon user interaction), e.g., to match several real sensor characteristics.

A second step of the generating S30 may comprise computing S31 virtual depth images of the 3D surface representation each at a respective point along the browsing sequence. The computing S31 of the virtual depth images may comprise performing a rasterization. For each position, the computing S31 may comprise using rasterization techniques to obtain a synthetic 2D image capture by the synthetic sensor from the set of sensor parameters, the camera position and orientation and the mesh representation of the 3D scene. Among the parameters for the rasterization, the computing S31 may comprise setting a minimum distance and a maximum distance from the camera from which each point cloud is acquired (e.g., the minimum distance may be higher than 5 centimeters and/or lower than 20 centimeters, e.g., the minimum distance may be equal to 10 centimeters and/or the maximum distance may be higher than 1 meter and/or lower than 5 meters, e.g., the maximum distance may be equal to 3 meters). Again, the generating method may comprise selecting (e.g., changing) those parameters (e.g., tuning those parameters, for example upon user interaction), e.g., to simulate different type of sensors and obtain different point clouds for a given 3D scene.

Each pixel of this 2D image may contain the depth information and the id of the object mesh face it results from. In examples, the computing S31 may comprise using the Pytorch3D library, e.g., to be performed in a batch manner.

Then, a third step of the generating S30 may comprise sampling S32 each depth image with 3D points, i.e., obtaining 3D points from the images. For each camera position and orientation on the path P, the sampling S32 may comprise retrieving per viewpoint the point coordinates in the 3D space with object level annotations for each pixel of the 2D image. This retrieving may be done by using the camera parameters and the depth information for each pixels using the following formula (e.g., as implemented in the unproject_points method from the pytorch3d library).

Given for example the camera parameters:

- Near clipping plane of viewing frustum $z_{near}$ = 1.0,
- Far clipping plane of viewing frustum $z_{far}$ = 100.0,
- The aspect ratio $\alpha$ = 1 (square pixels), and/or
- The field of view *fov* = 60°,

the sampling S32 may comprise computing 3D coordinates of the points *X, Y, Z* from the image's pixels and the depth *x, y,*

*depth* for each pixel based on: $\begin{bmatrix} X \\ Y \\ Z \end{bmatrix} = \begin{bmatrix} x \\ y \\ depth \end{bmatrix} \cdot U$ where *U* is the unprojection transformation matrix defined as *U* =

*inv(P · Q)*, wherein $P = \begin{bmatrix} s_1 & 0 & w_1 & 0 \\ 0 & s_2 & h_1 & 0 \\ 0 & 0 & f_1 & f_2 \\ 0 & 0 & 1 & 0 \end{bmatrix}$ is the projection matrix defined from the camera parameters

$$\begin{cases} s_1 = \dfrac{1}{\tan(fov/2)} \\[2mm] s_2 = \dfrac{1}{\tan(fov/2)\times\alpha} \\[2mm] w_1 = \dfrac{x_{max}+x_{min}}{x_{max}-x_{min}} \\[2mm] h_1 = \dfrac{y_{max}+y_{min}}{y_{max}-y_{min}} \\[2mm] f_1 = \dfrac{z_{far}}{z_{far}-z_{near}} \\[2mm] f_2 = \dfrac{-(z_{far}\times z_{near})}{z_{far}-z_{near}} \end{cases}$$
and $Q = R \cdot T$ is the world to view transformation matrix (which is the composition of the rotation and translation matrices).

The sampling S32 may comprise retrieving the following annotations and using them to label the point cloud:

- Point class labelling (e.g., chair, desk and/or table),
- Point 3D model labelling (e.g., chair model 1, chair model 2 and/or table model 20),
- Point instance labelling (e.g., chair model 1 instance 1 and/or chair model 1 instance 2),
- 3D bounding boxes,
- Per object and scene wise meshes, and/or
- Optionally, depending on the database of objects, the sampling S32 may also retrieve, per object (and accordingly per point of the point cloud) style annotation, color annotations and/or object part annotations.

The sampling S32 may comprise retrieving point level annotations directly from the rasterization step by using the pixel to object surface correspondence.

For 3D bounding boxes, the sampling S32 may comprise using the meshes information to compute the 3D bounding boxes of each object and label the point clouds thanks to them. In that case, the sampling S32 may comprise filtering the 3D bounding boxes annotations that contain a number of points corresponding to the objects they respectively correspond to inferior to a certain threshold (e.g., 20). Indeed, in examples, depending on the path defined, certain objects in the scene may results in a very low (even 0) number of points in the point cloud, and labelling the point clouds with their annotation may result in harmful annotations for the training process. The filtering thus allows reducing this risk of harmful annotations. The sampling S32 may comprise applying the same principle for object and scene meshes. For example, the sampling S32 may comprise discarding object meshes for objects that do not appear in the point cloud. The object may also refer to any architectural element of the room (e.g., a wall or a door).

Real sensors may fail to capture special object textures such as transparent surfaces (e.g., glass). In order to take into account for those, optionally, the generating method may comprise using the texture of the mesh (e.g., when the environment includes the texture) in order to add special noise to the corresponding points coordinates between the steps S31 and S32 (i.e., in the depth information of the real-world 3D point coordinates). In examples, the generating method may comprise deducing the texture from the semantic categories of the mesh (e.g., windows are usually transparent), for example, when the environment do not include the texture for the mesh.

The using method is now discussed. The using method may comprise, using the generated annotations and point clouds, training existing neural network architectures to perform one or more tasks usually comprised in an indoor scene reconstruction (e.g., creating a 3D scene from a 3D point cloud captured with a point cloud sensor). Since the neural networks are trained on almost endless user behaviors and type of sensors, they are able to perform better (at least on the generalization aspect) than the same models trained on less data with poor variety. The using method may comprise training the neural network(s) for any one or any combination of the following tasks:

- 3D object detection,
- 3D semantic object segmentation,
- 3D surface detection and reconstruction,
- 3D object retrieval,
- 3D object reconstruction from point cloud, and/or
- 3D interactive segmentation.

By simulating the scan (i.e., by calculating a path of plausible positions in a 3D environment), the generating method has different advantages compared to uniform sampling on large 3D meshes. Also, it leads to obtaining more complete datasets than those available in the literature. Compared to a uniform sampling on the 3D mesh, the use of the rasterization allows avoiding obtaining points on internal or inaccessible surfaces for a real user. This also allows accounting for occlusions (e.g., few points on the chairs under the tables). The generating of the traveling allows mimicking several plausible users' behaviors, increasing the realism of the scenes in order to improve the final 3D scene reconstruction in the inference mode.

It is widely known that increasing the number of training samples allows for better network performances (as discussed in any paper related to data augmentation such as the document Dvornik, N., Mairal, J., & Schmid, C. (2019). On the importance of visual context for data augmentation in scene understanding. IEEE transactions on pattern analysis and machine intelligence, 43(6), 2014-2028, which is incorporated herein by reference). The use of synthetic dataset is then crucial when real data becomes limited. This is the case for indoor scene object detection or more generally for any point cloud related training where data acquisition and annotation is still very time and resource consuming, especially to have in the dataset several point clouds corresponding to several user behaviors. As the generating method is fast and may be replicated on a very large number of scenes, the generating method allows not limiting the number of point cloud instances obtained. Also, provided that the database of objects present in the scanned 3D environments is quite complete and rich, the generating method allows scaling the number of categories for more complete data than the classic object detection benchmarks. This additional richness allows training more efficient neural networks on 3D scenes. Therefore, the generating method therefore strongly helps to better train neural networks models for indoor scene reconstruction from user scans. These neural networks may be any neural network that takes (or consumes) point clouds as input. For example, the neural network may be configured for any one or any combination of the following applications: 3D object detection from point clouds, 3D semantic segmentation from point clouds, 3D point clouds completion, interactive segmentation in point clouds, 3D surface reconstruction from point clouds, 3D object retrieval from point clouds and/or 3D registration in point clouds.

With reference to FIG.s 6 to 8, examples of results of the generating method are now discussed.

In these examples, different models (or neural networks) having a same architecture are trained on different datasets and evaluated on the ScanNet dataset (http://www.scan-net.org/) of real-life scans. The different models include:

- a model (model A) trained on synthetic data (100 cameras sampled randomly in the circulation space of the room, dataset A), and
- a model (model B) trained based on the generated training dataset (i.e., generated by using the generating method, dataset B).

The point clouds generated for the training correspond to the same dataset of scenes: 750 projects from which 1027 room point clouds with a split of 70/20/10 for train/val/test (i.e., 718/206/103) are extracted. The evaluation dataset comprises 142 scans from ScanNet dataset.

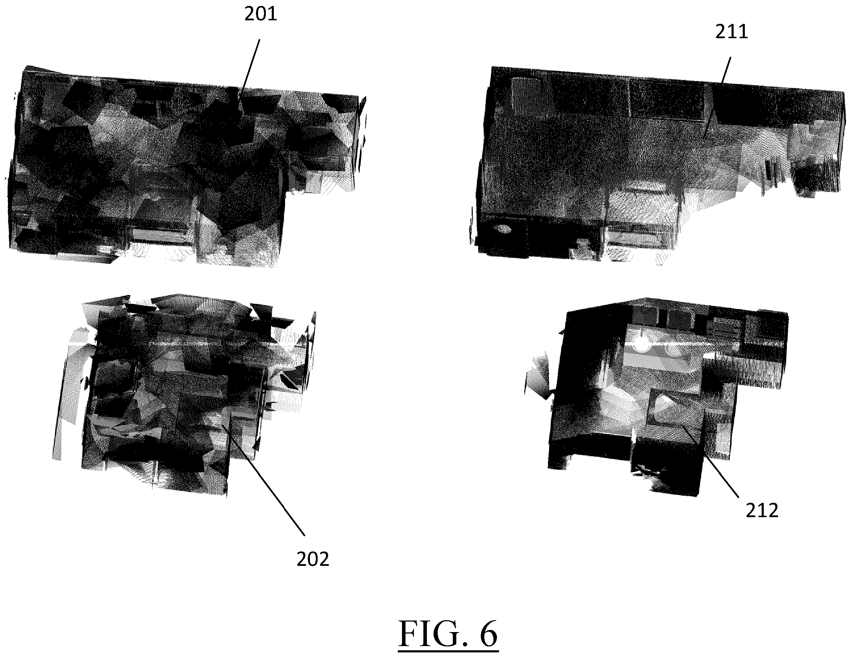

FIG. 6 shows the point clouds 201, 202 generated with the random sampling of positions results in PCs (dataset A). The figure shows that these point clouds 201, 202 comprise unnatural "patches" of points. FIG. 6 also shows the point clouds 211, 2012 generated with the generating method (dataset B). The figure shows that the point clouds 211, 2012 generated based on the generating method are more realistic and "smooth" PCs even if parts of the scenes are considered "inaccessible".

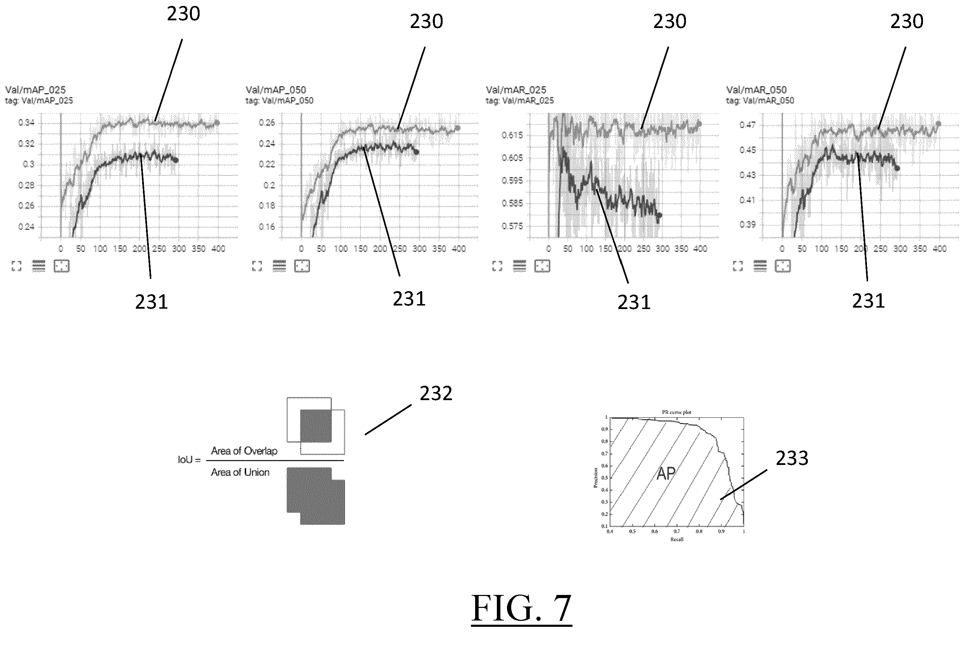

FIG. 7 shows a comparison of the results 231 of the model A (i.e., trained with the synthetic data, dataset A) and the results 230 of the model B (i.e., trained with the generated training dataset B) for the following metrics. The first metric defines correct predictions when the IoU is higher 0.5. FIG. 7 illustrates the formula 231 of the IoU. The second metric defines precision and recall for each class based on categories: AP 232 is the AuC (Area under Precision-Recall Curve) and mAP is the mean of all APs. More details on AP are discussed in the document https://yanfengliux.medium.com/the-confusing-metrics-of-ap-and-map-for-object-detection-3113ba0386ef which is incorporated herein by reference.

The comparison of the results of the two models shows that even when evaluating each model on data generated in the same way as for training, the model trained on the dataset generated using the generated method (model B) allows obtaining better results than the model A. The results also show that the model A trained with the dataset generated without path is more prone to overfitting.

The following tables show the results obtained for each model. The weights obtained after the 200th epoch of training for each model are used. Each model is evaluated on its corresponding test set (i.e., the dataset obtained with the random positions method for the model A and the dataset obtained with the generating method for the model B). As expected from the previous curves, the results with the model trained on the dataset generated by the generating method shows slightly better results.

Table 1: Results obtained for the model A (without traveling path)

**Model A trained on dataset without path**

| classes | AP25 | AR25 | AP50 | AR50 |
|---|---|---|---|---|
| plant | 0.3489 | 0.4444 | 0.2507 | 0.3514 |
| wardrobe | 0.1046 | 0.4783 | 0.0345 | 0.3043 |
| curtain | 0.0834 | 0.2857 | 0.019 | 0.1203 |
| door | 0.2045 | 0.4116 | 0.1087 | 0.2483 |
| window | 0.0556 | 0.2164 | 0.0041 | 0.0634 |
| cushion | 0.2022 | 0.6433 | 0.0638 | 0.3216 |
| radiator | 0.3372 | 0.75 | 0.1717 | 0.5625 |
| sink | 0.2223 | 0.7273 | 0.1189 | 0.3636 |
| stool | 0.7121 | 0.9474 | 0.6609 | 0.8772 |
| chair | 0.8383 | 0.9146 | 0.8233 | 0.9024 |
| bench | 0.4242 | 0.8 | 0.1255 | 0.5 |
| pouf | 0.4938 | 0.5909 | 0.4551 | 0.5455 |
| sofa | 0.6988 | 0.9157 | 0.5396 | 0.8072 |
| ceiling_lamp | 0.4915 | 0.7388 | 0.4003 | 0.5672 |
| desk | 0.2808 | 0.5 | 0.2808 | 0.5 |
| cabinet | 0.4104 | 0.823 | 0.2393 | 0.5929 |
| lamp | 0.2092 | 0.4058 | 0.1238 | 0.2609 |
| vase | 0.0177 | 0.2143 | 0.0128 | 0.0833 |
| shelve | 0.1406 | 0.4253 | 0.0974 | 0.2989 |
| nightstand | 0.4748 | 0.8 | 0.4748 | 0.8 |
| sideboard | 0.2776 | 0.88 | 0.2724 | 0.8 |
| table | 0.8106 | 0.9767 | 0.7206 | 0.8605 |
| bed | 0.5314 | 0.6667 | 0.4222 | 0.4444 |
| side_table | 0.1672 | 0.8276 | 0.1255 | 0.6552 |
| tv | 0.576 | 0.8333 | 0.3358 | 0.7083 |
| tv_fumitures | 0.3797 | 0.8333 | 0.3488 | 0.6667 |
| dresser | 0.3069 | 0.8667 | 0.2609 | 0.7333 |
| book | 0.0741 | 0.2672 | 0.0074 | 0.0916 |
| coffee_table | 0.3261 | 0.6786 | 0.2434 | 0.5357 |
| **Overall** | **0.3517** | **0.6504** | **0.267** | **0.5023** |

Table 2: Results obtained for the model B (with traveling path)

**Model B trained on the generated trained dataset**

| classes | AP25 | AR25 | AP50 | AR50 |
|---|---|---|---|---|
| plant | 0.3789 | 0.4554 | 0.268 | 0.3538 |
| wardrobe | 0.1738 | 0.5714 | 0.1502 | 0.2857 |
| curtain | 0.0617 | 0.3016 | 0.0217 | 0.1587 |
| door | 0.14 | 0.3765 | 0.0453 | 0.1843 |
| window | 0.0231 | 0.1712 | 0.0006 | 0.027 |
| cushion | 0.1822 | 0.6545 | 0.081 | 0.3394 |
| radiator | 0.3952 | 0.7568 | 0.1651 | 0.5135 |
| sink | 0.171 | 0.45 | 0.0818 | 0.3 |
| stool | 0.6866 | 0.9167 | 0.6531 | 0.8833 |
| chair | 0.8896 | 0.9486 | 0.8486 | 0.913 |
| bench | 0.1214 | 0.7778 | 0.025 | 0.5556 |
| pouf | 0.2193 | 0.8421 | 0.1886 | 0.6316 |
| sofa | 0.7215 | 0.9014 | 0.6235 | 0.8169 |
| ceiling_lamp | 0.444 | 0.6875 | 0.2983 | 0.5089 |
| desk | 0.7033 | 1 | 0.448 | 0.8571 |

(continued)

**Model B trained on the generated trained dataset**

| classes | AP25 | AR25 | AP50 | AR50 |
|---|---|---|---|---|
| cabinet | 0.4597 | 0.7881 | 0.2927 | 0.5678 |
| lamp | 0.268 | 0.542 | 0.2037 | 0.3664 |
| vase | 0.0167 | 0.2747 | 0.0069 | 0.0989 |
| shelve | 0.089 | 0.2989 | 0.0646 | 0.1954 |
| nightstand | 0.4524 | 0.5714 | 0.4524 | 0.5714 |
| sideboard | 0.4459 | 0.9048 | 0.3853 | 0.8095 |
| table | 0.8212 | 0.9744 | 0.7752 | 0.9231 |
| bed | 0.62 | 0.75 | 0.2556 | 0.375 |
| side_table | 0.2987 | 0.6875 | 0.2958 | 0.6562 |
| tv | 0.692 | 0.9756 | 0.3497 | 0.7317 |
| tv_furnitures | 0.4489 | 0.875 | 0.4216 | 0.7917 |
| dresser | 0.2869 | 1 | 0.2835 | 0.8462 |
| book | 0.0829 | 0.2519 | 0.0127 | 0.0687 |
| coffee_table | 0.3704 | 0.8 | 0.2837 | 0.675 |
| **Overall** | **0.3677** | 0.6726 | **0.2753** | **0.5174** |

The following table 3 indicates the categories mapping between "HomeByMe" solution and scannet. Lines with * correspond to the categories kept for further analysis. Lines with ** are not considered afterwards. Other Scannet classes unmapped to HomeByMe classes include Picture, Counter, Refrigerator, Showercurtain, Toilet, Bathtub and OtherFurniture.

3D Bounding boxes annotations from Scannet are not oriented (axis-aligned bounding boxes for manual annotation simplicity). Some objects visible in the scans are not annotated.

Table 3: Categories mapping between HomeByMe and scannet

| HomeByMe classes | Scannet corresponding class |
|---|---|
| plant | otherfurniture |
| wardrobe * | Bookshelf * |
| curtain ** | Curtain ** |
| door ** | Door ** |
| window ** | window ** |
| cushion | otherfurniture |
| radiator | otherfurniture |
| sink ** | Sink ** |
| stool * | chair * |
| chair * | chair * |
| bench * | chair * |
| pouf * | chair * |
| coffee_table * | table * |
| sofa * | sofa * |
| ceiling_lamp | otherfurniture |
| desk * | desk* |
| cabinet * | cabinet * |
| lamp | otherfurniture |
| vase | otherfurniture |
| shelve * | bookshelf * |
| nightstand * | table * |
| sideboard * | table * |
| table * | table * |
| bed * | bed * |

(continued)

| HomeByMe classes | Scannet corresponding class |
| --- | --- |
| side_table * | table * |
| tv | otherfurniture |
| tv_furnitures * | table * |
| dresser * | table * |
| book | otherfurniture |

The following tables 4 and 5 show the results considering major corresponding categories between Scannet and HomeByMe. The results shows that the model trained on the training dataset generated by the generating method leads to better results. Moreover, the 3D bounding boxes annotations in Scannet are not oriented, whereas the model trained with the generated training dataset predicts oriented bounding boxes which penalizes the metrics. Considering this, considering a 25% threshold for the IoU seems preferable then the 50% one.

Table 4: Results obtained for the model A (without traveling path)

| Without path (random positions in the room) | | | | |
| --- | --- | --- | --- | --- |
| classes | AP25 | AR25 | AP50 | AR50 |
| bookshelf | 0.097 | 0.6104 | 0.0287 | 0.1688 |
| chair | 0.7068 | 0.7763 | 0.3483 | 0.4912 |
| sofa | 0.6337 | 0.8763 | 0.5149 | 0.6907 |
| desk | 0.2368 | 0.5984 | 0.0997 | 0.3307 |
| cabinet | 0.017 | 0.2608 | 0.0017 | 0.0041 |
| table | 0.2678 | 0.6886 | 0.1748 | 0.4657 |
| bed | 0.1571 | 0.1728 | 0.1162 | 0.1358 |
| **Overall** | **0.302314** | **0.569086** | **0.183471** | **0.339571** |

Table 5: Results obtained for the model B (with traveling path)

| With simulated path | | | | |
| --- | --- | --- | --- | --- |
| classes | AP25 | AR25 | AP50 | AR50 |
| bookshelf | 0.1979 | 0.7013 | 0.0629 | 0.2338 |
| chair | 0.6962 | 0.7887 | 0.2955 | 0.4686 |
| sofa | 0.6258 | 0.8866 | 0.5126 | 0.7423 |
| desk | 0.35 | 0.8661 | 0.0889 | 0.4882 |
| cabinet | 0.0098 | 0.172 | 0.0005 | 0.0457 |
| table | 0.2847 | 0.6514 | 0.1901 | 0.4514 |
| bed | 0.3633 | 0.3951 | 0.2073 | 0.2963 |
| **Overall** | **0.3611** | **0.637314** | **0.193971** | **0.389471** |

These tables exclude the additional categories that we are able to detect thanks to the "HomeByMe" dataset (compared to Scannet annotations). These results correspond to models trained with reduced datasets.

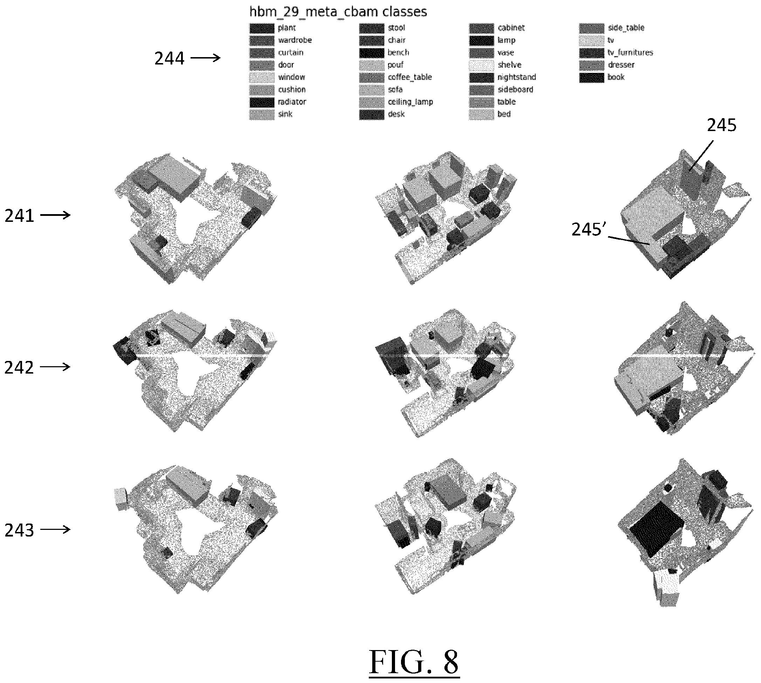

FIG. 8 shows examples of prediction results obtained by the two models A and B. The figure shows the Scannet ground truth 241 used for the comparison. The figure shows the categories 244 of objects. The objects 245, 245' are scannet labeled objects with unmapped classes or with "otherfurniture" label. The figure shows the predictions 242 of a model trained on the training dataset generated by the generating method (dataset B) and the predictions 243 of a model trained on dataset without path (random positions, dataset A). The comparison shows that the model trained on the generated training dataset (model B) detect additional classes that are not in scannet annotations (e.g., plants, lamps or tv). Most of these detections correspond to objects present in the scan (after manual check) but that were not manually annotated in the dataset.

The results show that the generating method has several advantages. Firstly, the manual acquisition and annotation of a dataset of real-life scans, such as Scannet, is a time-consuming and subjective task. This leads to a smaller dataset with fewer classes and poor annotations. For example, the 3D bounding boxes in scannet are not oriented and some objects are not even annotated. The generating method is a real game-changer in this aspect. Secondly, the generating method (based on user path simulation) generates more realistic looking "smooth" scans with natural occlusions. Thirdly, a model of 3D Object Detection trained on a training dataset generated by the generating method leads to better detection results than a model trained on a naively generated dataset. Moreover, this analysis might underestimate the positive impact of the generating method. Indeed, due to the lack of classes and poor quality of annotations in Scannet (missing objects and non-oriented bounding boxes), the metrics are penalized, and the scans have been manually assessed where the predictions seemed consistent but have been poorly evaluated with respect to scannet annotations.

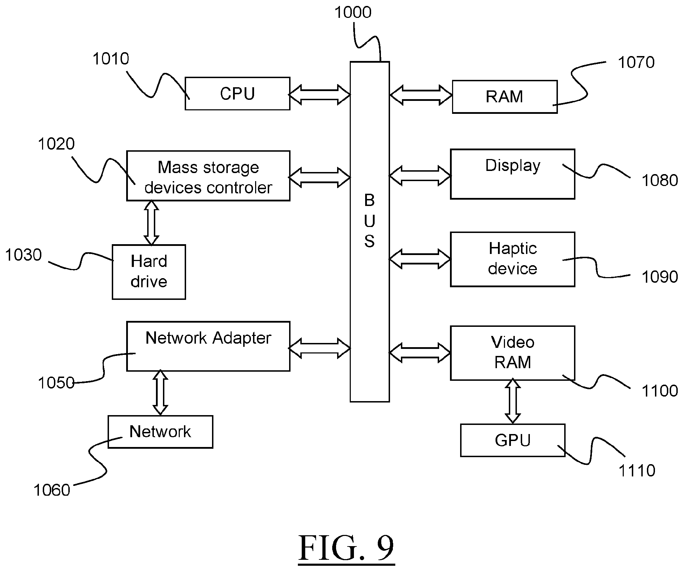

FIG. 9 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

**Claims**

1. A computer-implemented method comprising:

   • generating a training dataset comprising training patterns each including a 3D point cloud of a respective travelable environment, the generating comprising for each 3D point cloud:

      ◦ providing (S10) a 3D surface representation (101) of the respective travelable environment;
      ◦ determining (S20) a traveling path (104) inside the respective travelable environment, wherein the determining (S20) of the traveling path (104) comprises:

         ▪ determining (S21) a circulation area (102) of the respective travelable environment, the circulation area (102) being a footprint, on a 2D surface floor representation of the respective travelable environment, of a volume of the respective travelable environment which is free of any 3D object between a minimum height and a maximum height;
         ▪ determining (S22) a positioned graph (103) inside the circulation area (102), the positioned graph (103) representing a topological skeleton of the circulation area (102); and
         ▪ identifying (S23) a browsing sequence of points on the positioned graph (103), thereby obtaining the traveling path (104); and

   ◦ generating (S30) a virtual scan of the respective travelable environment along the traveling path (104), thereby obtaining the 3D point cloud; and

   • using the generated training dataset for training a neural network taking as input a scan of a real-world environment to perform a 3D scene understanding of the real-world environment based on the scan.

2. The method of claim 1, wherein the generating (S30) of the virtual scan comprises:

   • computing (S31) virtual depth images (105) of the 3D surface representation (101) each at a respective point along the browsing sequence; and
   • sampling (S32) each depth image (105) with 3D points, the sampled 3D points forming the obtained 3D point cloud.

3. The method of claim 2, wherein the computing (S31) of the virtual depth images (105) comprises, for each point of the browsing sequence, calculating a respective virtual depth image (105) based on a position of the point and an orientation of the traveling path (104) at the point.

4. The method of any one of claims 1 to 3, wherein the identifying (S23) of the browsing sequence comprises minimizing a traveling distance.

5. The method of any one of claims 1 to 4, wherein the determining (S21) of the circulation area (102) comprises:

   • retrieving the set of all objects having a position on the 3D surface representation (101) which is between the minimum height and the maximum height;
   • projecting, on the 2D surface floor representation, the 3D surface representation (101) of said set of objects, thereby obtaining a non-travelable area; and
   • subtracting the non-travelable area to the 2D surface floor representation.

6. The method of claim 5, wherein the determining of the circulation area (102) further comprises:

   • determining a margin area around the non-travelable area; and
   • subtracting the margin area to the 2D surface floor representation.

7. The method of any one of claims 1 to 6, wherein the positioned graph (103) represents a portion of a medial axis graph of the circulation area (102).

8. The method of claim 7, wherein the determining (S20) of the traveling path (104) comprises determining the medial axis graph of the circulation area (102), the medial axis graph comprising at least one isolated leave, the determining (S22) of the positioned graph (103) comprising removing the at least one isolated leave from the medial axis graph.

9. The method of any one of claims 1 to 8, wherein the positioned graph (103) comprises edges each between a respective pair of nodes of the positioned graph (103), the distance represented by each edge of the positioned graph (103) being smaller or equal than 30 centimeters.

10. A computer program comprising instructions which, when the program is executed by a computer, cause the computer to carry out the method of any one of claims 1 to 9.

11. A computer readable storage medium having recorded thereon the computer program of claim 10.

12. A system comprising a processor coupled to a memory, the memory having recorded thereon the computer program of claim 10.

**Patentansprüche**

1. Computerimplementiertes Verfahren, umfassend:

• Erzeugen eines Trainingsdatensatzes, umfassend Trainingsmuster, wobei jedes Trainingsmuster eine 3D-Punktwolke einer jeweiligen befahrbaren Umgebung beinhaltet, das Erzeugen umfassend für jede 3D-Punktwolke:

  ○ Bereitstellen (S10) einer 3D-Oberflächendarstellung (101) der jeweiligen befahrbaren Umgebung;
  ○ Bestimmen (S20) eines Fahrwegs (104) innerhalb der jeweiligen befahrbaren Umgebung, wobei das Bestimmen (S20) des Fahrwegs (104) Folgendes umfasst:

    ▪ Bestimmen (S21) eines Zirkulationsbereichs (102) der jeweiligen befahrbaren Umgebung, wobei der Zirkulationsbereich (102) ein Fußabdruck auf einer 2D-Oberflächenbodendarstellung der jeweiligen befahrbaren Umgebung ist, der ein Volumen der jeweiligen befahrbaren Umgebung darstellt, das zwischen einer Mindesthöhe und einer Maximalhöhe frei von jeglichem 3D-Objekt ist;
    ▪ Bestimmen (S22) eines positionierten Graphen (103) innerhalb des Zirkulationsbereichs (102), wobei der positionierte Graph (103) ein topologisches Skelett des Zirkulationsbereichs (102) darstellt; und
    ▪ Identifizieren (S23) einer Durchlaufsequenz von Punkten auf dem positionierten Graphen (103), wodurch der Fahrweg (104) erlangt wird; und

  ○ Erzeugen (S30) eines virtuellen Scans der jeweiligen befahrbaren Umgebung entlang des Fahrwegs (104), wodurch die 3D-Punktwolke erlangt wird; und

• Verwenden des erzeugten Trainingsdatensatzes zum Trainieren eines neuronalen Netzes, das als Eingang einen Scan einer realen Umgebung erhält, um ein 3D-Szenenverständnis der realen Umgebung basierend auf dem Scan durchzuführen.

2. Verfahren nach Anspruch 1, wobei das Erzeugen (S30) des virtuellen Scans Folgendes umfasst:

• Berechnen (S31) virtueller Tiefenbilder (105) der 3D-Oberflächendarstellung (101) jeweils an einem jeweiligen Punkt entlang der Durchlaufsequenz; und
• Abtasten (S32) jedes Tiefenbilds (105) mit 3D-Punkten, wobei die abgetasteten 3D-Punkte die erlangte 3D-Punktwolke bilden.

3. Verfahren nach Anspruch 2, wobei das Berechnen (S31) der virtuellen Tiefenbilder (105), für jeden Punkt der Durchlaufsequenz, ein Berechnen eines jeweiligen virtuellen Tiefenbilds (105) basierend auf einer Position des Punkts und einer Ausrichtung des Fahrwegs (104) an dem Punkt umfasst.

4. Verfahren nach einem der Ansprüche 1 bis 3, wobei das Identifizieren (S23) der Durchlaufsequenz ein Minimieren einer Fahrstrecke umfasst.

5. Verfahren nach einem der Ansprüche 1 bis 4, wobei das Bestimmen (S21) des Zirkulationsbereichs (102) Folgendes umfasst:

• Abrufen des Satzes aller Objekte, die eine Position auf der 3D-Oberflächendarstellung (101) aufweisen, die zwischen der Mindesthöhe und der Maximalhöhe ist;
• Projizieren, auf die 2D-Oberflächenbodendarstellung, der 3D-Oberflächendarstellung (101) des Satzes von Objekten, wodurch ein nicht befahrbarer Bereich erlangt wird; und
• Subtrahieren des nicht befahrbaren Bereichs von der 2D-Oberflächenbodendarstellung.

6. Verfahren nach Anspruch 5, wobei das Bestimmen des Zirkulationsbereichs (102) ferner Folgendes umfasst:

• Bestimmen eines Randbereichs um den nicht befahrbaren Bereich; und
• Subtrahieren des Randbereichs von der 2D-Oberflächenbodendarstellung.

7. Verfahren nach einem der Ansprüche 1 bis 6, wobei der positionierte Graph (103) einen Abschnitt eines Medialachsen-Graphen des Zirkulationsbereichs (102) darstellt.

8. Verfahren nach Anspruch 7, wobei das Bestimmen (S20) des Fahrwegs (104) das Bestimmen des Medialachsen-Graphen des Zirkulationsbereichs (102) umfasst, der Medialachsen-Graph umfassend mindestens ein isoliertes Blatt, das Bestimmen (S22) des positionierten Graphen (103) umfassend ein Entfernen des mindestens einen isolierten Blatts aus dem Medialachsen-Graphen.

9. Verfahren nach einem der Ansprüche 1 bis 8, wobei der positionierte Graph (103) Kanten umfasst, jeweils zwischen einem jeweiligen Paar von Knoten des positionierten Graphen (103), wobei der durch jede Kante des positionierten Graphen (103) dargestellte Abstand kleiner als oder gleich wie 30 Zentimeter ist.

10. Computerprogramm, umfassend Anweisungen, die, wenn das Programm von einem Computer ausgeführt wird, den Computer veranlassen, das Verfahren nach einem der Ansprüche 1 bis 9 durchzuführen.

11. Computerlesbares Speichermedium, in dem das Computerprogramm nach Anspruch 10 aufgezeichnet ist.

12. System, umfassend einen Prozessor, der mit einem Speicher gekoppelt ist, wobei in dem Speicher das Computerprogramm nach Anspruch 10 aufgezeichnet ist.


**Revendications**

1. **Procédé** mis en œuvre par ordinateur comprenant :

    • la génération d'un ensemble de données d'entraînement comprenant des modèles d'entraînement comprenant chacun un nuage de points 3D d'un environnement praticable respectif, la génération comprenant, pour chaque nuage de points 3D :

        ◦ la fourniture (S10) d'une représentation de surface 3D (101) de l'environnement praticable respectif ;
        ◦ la détermination (S20) d'un trajet de déplacement (104) à l'intérieur de l'environnement praticable respectif, la détermination (S20) du trajet de déplacement (104) comprenant :

            ▪ la détermination (S21) d'une zone de circulation (102) de l'environnement praticable respectif, la zone de circulation (102) étant une empreinte, sur une représentation de la surface au sol 2D de l'environnement praticable respectif, d'un volume de l'environnement praticable respectif qui est exempt de tout objet 3D entre une hauteur minimale et une hauteur maximale ;
            ▪ la détermination (S22) d'un graphe positionné (103) à l'intérieur de la zone de circulation (102), le graphe positionné (103) représentant un squelette topologique de la zone de circulation (102) ; et
            ▪ l'identification (S23) d'une séquence de navigation de points sur le graphe positionné (103), afin d'obtenir le trajet de déplacement (104) ; et

        ◦ la génération (S30) d'un scan virtuel de l'environnement praticable respectif le long du trajet de déplacement (104), afin d'obtenir le nuage de points 3D ; et

    • l'utilisation de l'ensemble de données d'entraînement généré pour entraîner un réseau neuronal en prenant en guise d'entrée un scan d'un environnement réel afin d'effectuer une compréhension de scène 3D de l'environnement réel sur la base du scan.

2. Procédé selon la revendication 1, dans lequel la génération (S30) du scan virtuel comprend :

    • le calcul (S31) d'images de profondeur virtuelles (105) de la représentation de surface 3D (101) chacune au niveau d'un point respectif le long de la séquence de navigation ; et
    • l'échantillonnage (S32) de chaque image de profondeur (105) avec des points 3D, les points 3D échantillonnés formant le nuage de points 3D obtenu.

3. Procédé selon la revendication 2, dans lequel le calcul (S31) des images de profondeur virtuelles (105) comprend, pour chaque point de la séquence de navigation, le calcul d'une image de profondeur virtuelle respective (105) sur la base d'une position du point et d'une orientation du trajet de déplacement (104) au niveau du point.

4. Procédé selon l'une quelconque des revendications 1 à 3, dans lequel l'identification (S23) de la séquence de navigation comprend la minimisation d'une distance de déplacement.

**5.** Procédé selon l'une quelconque des revendications 1 à 4, dans lequel la détermination (S21) de la zone de circulation (102) comprend :

• la récupération de l'ensemble de tous les objets ayant une position sur la représentation de surface 3D (101) qui est comprise entre la hauteur minimale et la hauteur maximale ;
• la projection, sur la représentation de la surface au sol 2D, de la représentation de surface 3D (101) dudit ensemble d'objets, afin d'obtenir une zone non praticable ; et
• la soustraction de la zone non praticable de la représentation de la surface au sol 2D.

**6.** Procédé selon la revendication 5, dans lequel la détermination de la zone de circulation (102) comprend en outre :

• la détermination d'une zone de marge autour de la zone non praticable ; et
• la soustraction de la zone de marge de la représentation de la surface au sol 2D.

**7.** Procédé selon l'une quelconque des revendications 1 à 6, dans lequel le graphe positionné (103) représente une partie d'un graphe d'axe médian de la zone de circulation (102).

**8.** Procédé selon la revendication 7, dans lequel la détermination (S20) du trajet de déplacement (104) comprend la détermination du graphe d'axe médian de la zone de circulation (102), le graphe d'axe médian comprenant au moins une section isolée, la détermination (S22) du graphe positionné (103) comprenant la suppression de l'au moins une section isolée du graphe d'axe médian.

**9.** Procédé selon l'une quelconque des revendications 1 à 8, dans lequel le graphe positionné (103) comprend des arêtes chacune entre une paire respective de nœuds du graphe positionné (103), la distance représentée par chaque arête du graphe positionné (103) étant inférieure ou égale à 30 centimètres.

**10.** Programme informatique comprenant des instructions qui, lorsque le programme est exécuté par un ordinateur, amènent l'ordinateur à exécuter le procédé selon l'une quelconque des revendications 1 à 9.

**11.** Support de stockage lisible par ordinateur sur lequel est enregistré le programme informatique selon la revendication 10.

**12.** Système comprenant un processeur couplé à une mémoire, le programme informatique selon la revendication 10 étant enregistré sur la mémoire.

| Providing a 3D surface representation of the respective travelable environment | S10 |

| Determining a traveling path inside the respective travelable environment | S20 |

| Determining a circulation area of the respective travelable environment | S21 |

| Determining a positioned graph inside the circulation area, the positioned graph representing a topological skeleton of the circulation area | S22 |

| Identifying a browsing sequence of points on the positioned graph, thereby obtaining the traveling path | S23 |

| Generating a virtual scan of the respective travelable environment along the traveling path, thereby obtaining the 3D point cloud | S30 |

| Computing virtual depth images of the 3D surface representation each at a respective point along the browsing sequence | S31 |

| Sampling each depth image with 3D points, the sampled 3D points forming the obtained 3D point cloud | S32 |

## FIG. 1

Step 1: Path computation

S10 101 — 3D environment

S21 102 — Circulable Space

S22 103 — Positions graph

S23 104 — User path

Step 2: Point cloud retrieval

S30 105 — Depth map computation

S31

S31' — Object annotations

105

Rasterization

Aggregate information

S32 — Annotated point cloud

+ Object Bounding boxes

S33 — Fully annotated point cloud

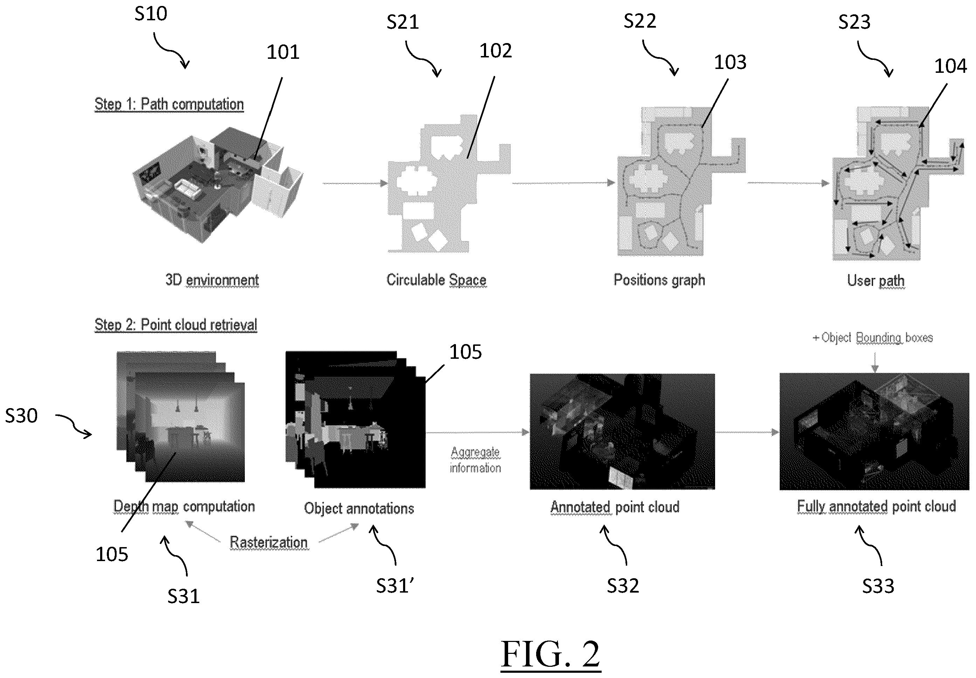

## FIG. 2

EP 4 394 720 B1

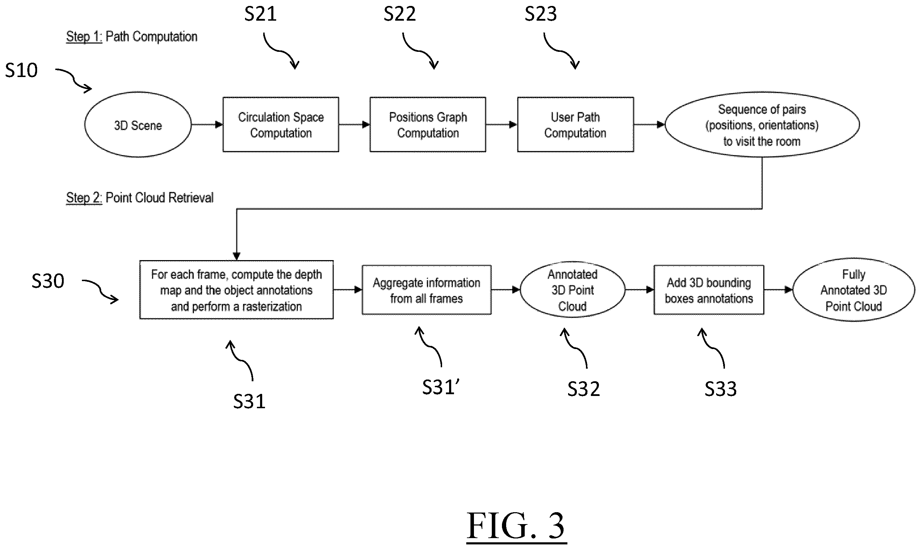

FIG. 3

FIG. 4

EP 4 394 720 B1

S22

S221 — Raw Medial Axis Graph

S222 — Remove 2-degree nodes and leaves

S223 — Refine large edges using original points

S224 — Remove isolated leaves

FIG. 5

FIG. 6

FIG. 7

EP 4 394 720 B1

hbm_29_meta_cbam classes

| | | | | | | | |
|---|---|---|---|---|---|---|---|
| plant | | stool | | cabinet | | side_table | |
| wardrobe | | chair | | lamp | | tv | |
| curtain | | bench | | vase | | tv_furnitures | |
| door | | pouf | | shelve | | dresser | |
| window | | coffee_table | | nightstand | | book | |
| cushion | | sofa | | sideboard | | | |
| radiator | | ceiling_lamp | | table | | | |
| sink | | desk | | bed | | | |

244 →

241 →

242 →

243 →

245

245'

## FIG. 8

1000

1010 — CPU

1070 — RAM

1020 — Mass storage devices controler

1030 — Hard drive

Network Adapter

1050

Network

1060

B
U
S

Display — 1080

Haptic device — 1090

Video RAM — 1100

GPU

1110

## FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HILDEBRAND J et al.** SIMULATING LIDAR TO CREATE TRAINING DATA FOR MACHINE LEARNING ON 3D POINT CLOUDS. *SPRS ANNALS OF THE PHOTOGRAMMETRY, REMOTE SENSING AND SPATIAL INFORMATION SCIENCES*, 19 October 2022
- **HOU, JI et al.** Exploring data-efficient 3d scene understanding with contrastive scene contexts. *Proceedings of the IEEE/CVF Conference on Computer Vision and Pattern Recognition*, 2021, https://openaccess.thecvf.com/content/CVPR2021/papers/Hou_Exploring_Data-Efficient_3D_Scene_Understanding_With_Contrastive_Scene_Contexts_CVPR_2021 _paper.pdf

- **ZHANG, CHENG et al.** Holistic 3d scene understanding from a single image with implicit representation. *Proceedings of the IEEE/CVF Conference on Computer Vision and Pattern Recognition*, 2021, https://openaccess.thecvf.com/content/CVPR2021/-papers/Zhang_Holistic_3D_Sce ne_Understanding_From a Single_Image With_Implicit_CVPR_2021_paper.pdf
- **DVORNIK, N.** ; **MAIRAL, J.** ; **SCHMID, C.** On the importance of visual context for data augmentation in scene understanding.. *IEEE transactions on pattern analysis and machine intelligence*, 2019, vol. 43 (6), 2014-2028